# EUROPEAN PATENT APPLICATION

(11) **EP 4 194 985 A1**
(43) Date of publication of application: **14.06.2023**
(21) Application number: 21213524.8
(22) Date of filing: 09.12.2021
(51) Int. Cl.: G05D 1/00

(54) **AUTONOMOUS BOT CONTROL FOR PLANT INSPECTION, CONTROL AND REPAIR**

(71) Applicant: ABB SCHWEIZ AG, 5400 Baden (CH)
(72) Inventor: LINGE, Simon, 724 76 Västerås (SE); SHARMA, Divyasheel, 560048 Karnataka (IN); RODRIGUEZ, Pablo, 68549 Ilvesheim (DE); BERNING, Matthias, 67549 Worms (DE); KLOEPPER, Benjamin, 68199 Mannheim (DE); BORRISON, Reuben, 68199 Ketsch (DE); DIX, Marcel, 68167 Mannheim (DE); SCHMIDT, Benedikt, 69117 Heidelberg (DE); ABUKWAIK, Hadil, 69469 Weinheim (DE); KOTRIWALA, Arzam, 68526 Ladenburg (DE); MACZEY, Sylvia, 69493 Hirschberg (DE); ZIOBRO, Dawid, 72462 Västerås (SE); GAERTLER, Marco, 69221 Dossenheim (DE); DOPPELHAMER, Jens, 68526 Ladenburg (DE); K R, Chandrika, 560078 Bangalore (IN); GOPALAKRISHNAN, Gayathri, 17171 Solna (SE)
(74) Representative: Kransell & Wennborg KB

(57) **Abstract**

The present invention generally relates to a method for controlling an autonomous bot (100) configured for unmanned plant inspection and repair operations or for controlling the unmanned plant (200). The invention further relates to an autonomous bot, to a system comprising a set of autonomous bots, and an unmanned floating production storage and offloading plant operative offshore on which the autonomous bots are deployed, and to a computer program.

## Description

### Field of the Invention

The present invention generally relates to a method for controlling an autonomous bot configured for unmanned plant inspection and repair operations or for controlling the unmanned plant. The invention further relates to an autonomous bot, to a system comprising a set of autonomous bots, and an unmanned floating production storage and offloading plant operative offshore on which the autonomous bots are deployed, and to a computer program.

### Background

Traditionally, floating production storage and offloading plants (FPSO's) are manned to operate and maintain the operations of the plants. However, maintaining workers at offshore sites is not only expensive, but it also exposes the workers to harsh living and working conditions.

Therefore, it has become of interest to develop unmanned FPSOs. The advantage of unmanned FPSOs include reduced operational cost and, more importantly, since constant presence of humans on the FPSOs can be avoided, the risk for staff is substantially reduced.

Bots such as crawler robots and drones are being developed to support such unmanned operations. However, these bots are currently limited in their usage and focus mostly on plant inspections and minor repairs.

Further, these bots would operate in the harsh offshore conditions that will lead to bots being damaged and will face unusual wear and tear. Moreover, the bots may have to be subject to periodic maintenance modifications that are performed on field during operations.

Not only the bots, but the offshore production facilities can also get damaged, and be subject to maintenance modification due to the harsh offshore conditions. Some examples of such damages are waves slamming on rudders and damaging steering gear, or excessive rolling of the vessel during heavy swells and other unusual or unforeseen circumstances that the FPSOs are exposed to.

Such damages, wear and tear, or modifications have impact on deployed production and bot's system control and warrant updates to their control systems to continue stable and controlled management of the FPSO.

In an unmanned FPSO scenario, it is desirable that special Service Operation Vessels (SOVs) will travel to the FPSOs with maintenance workers on-board only once or twice a year. Thus, it is important to avoid equipment and process failures.

Accordingly, it would be desirable to improve the operation stability and control in unmanned offshore plants.

### Summary

In view of the above-mentioned and other drawbacks of the prior art, it is an object of the present invention to provide improved control methods and means for controlling autonomous bots for plant inspection and repair operations or for controlling an unmanned plant.

According to a first aspect of the invention, there is provided a method for controlling an autonomous bot configured for unmanned plant inspection and repair operations or for controlling the unmanned plant, the method comprising: detecting an unforeseen situation that affects the operation of at least one of the autonomous bot and the unmanned plant, characterizing, using an autonomous bot control system employed by the bot, or a plant control system of the plant, the unforeseen situation to determine whether it has disruptive impact on a respective one of the autonomous bot and the plant, wherein (1) if the disruptive impact is characterized to have an impact on an autonomous bot action, predicting, using an autonomous bot control model, how the disruptive impact affects other actions that the autonomous bot is configured to perform, and determining a new control plan for the autonomous bot using the autonomous bot control model, for inspection and repair actions taking the characterized impact on the autonomous bot action into account, and executing the new control plan, or (2) if the disruptive impact is characterized to have an impact on an unmanned plant functionality, predicting, using the autonomous bot control model, the impact on the plant operation, and controlling the autonomous bot for repairing the damage according to a corresponding repair plan, or preparing, using the autonomous bot control model, a new control plan for the unmanned plant to dynamically adapt to a reduced plant functionality caused by the characterized impact on the plant operation, and executing the new control plan.

The present invention is at least partly based on the realization to use an autonomous bot control model employed by the autonomous bot to monitor itself to provide new control plans in the event of a disruptive impact that has an impact on either the plant itself, or on the bot. Thus, the bot may adapt and learn, on-site, depending on circumstances around the bot and the plant. In other words, to perform updates to the control plans, the bots need to continuously learn control actions that would keep the plant stable. Further, to perform new repairs, the bots, having necessary repair equipment, are continuously updated with the plant environment models and new repair maneuvers via for example online Cloud updates delivered to the bots.

For example, the bots are configured to continuously monitor their condition and characterize any damage or deviation to their behavior based on their performance benchmarks and respond with dynamic updates to control plans until they can be repaired by the maintenance crew or onshore, if they cannot perform according to their benchmark. A benchmark being the pre-specific performance of performing a certain task or action.

Further, logic circuits of the plants may characterize plant damage, wear and tear, or modifications and perform updates to its control strategy to maintain plant stability and control. Based on the analysis, the plants may instruct the autonomous bots to repair the plant.

In embodiments, the method may further comprise: if the disruptive impact is characterized to have an impact on an autonomous bot action, and if the autonomous bot control model is unable to predict the impact on the plant operation with sufficiently high confidence, providing, by the autonomous bot, an instruction thereof to a remote operator. Thus, in case the autonomous bot control model is unable to predict the impact, it is advantageously configured to provide an instruction to a user. This reduces the risk of uncontrolled actions performed by the autonomous bots.

In embodiments, the instruction may include an indication that an override of the autonomous bot should be considered. Thus, in order to force the autonomous bot to not proceed with what may be uncontrolled actions, the operator may be encouraged to override the actions of the autonomous bot and take control of the autonomous bot.

In embodiments, the method may further comprise: if the disruptive impact is a novel disruptive impact and is characterized to have an impact on an autonomous bot action, and if the autonomous bot control model is unable to predict the impact on the plant operation with sufficiently high confidence for the novel disruptive impact, creating, by the autonomous bot control model, a new learning-based simulation for retraining the autonomous bot control model for the novel disruptive impact. Advantageously, the autonomous bot learns, through creating a new simulation, how to handle the novel situation. This improves the autonomy of the bots further.

In embodiments, the method may further comprise, for predicting the impact on the plant operation: comparing parameters of the characterized disruptive impact to an input set of the autonomous bot control model, wherein if the parameters are not in the distribution of the autonomous bot control model input set, determining that the autonomous bot control model is unable to predict the impact on the plant operation. Generally, this means that if the parameters that are meant to be used as input to the autonomous bot control model fall outside the pre-learned parameter space used for training the model, than it is determined that the autonomous bot control model is unable to predict the impact on the plant operation.

In embodiments, the method may further comprise: if the disruptive impact is characterized to have an impact on the plant functionality, simulating, by the autonomous bot, the repair plan in a plant simulation environment available to the autonomous bot, updating, by the autonomous bot, the repair plan including identified operation safety limits with a remote operator. Accordingly, the autonomous bot may learn, by having access to a plant simulation environment, how to handle a new repair situation. To reduce the risk of faulty new repair plans, the updated repair plan is provided to a remote operator. Operation safety limits may relate to limits to ensure that no damage is caused on the plant or that the production rate of the plant is not affected excessively.

In embodiments, the method may comprise receiving an indication that the repair plan is approved by the remote operator, and performing the repair plan by the autonomous bot.

In embodiments, the method may further comprise: if the reduced plant functionality is not generalizable by the autonomous bot control model, retraining the autonomous bot control model for the reduced plant functionality using a learning-based simulation, and communicating, to a remote operator, information indicative of the unforeseen situation and a further new control plan along with safety implications related to the unforeseen situation.

In embodiments, the method may comprise receiving an indication that the new control plan is approved by the remote operator and performing the control plan by the plant.

In embodiments, the autonomous bots may be remotely controllable by an operator, and the method may comprise receiving, by the autonomous bot, an override signal from the remote operator, and performing a task, by the autonomous bot, according to instructions received from the remote operator.

In embodiments, the autonomous bot control model is a parameterized model with adjustable/learnable parameters, such as a machine learning model.

In preferred embodiments, the plant may be an autonomous floating production storage and offloading plant operative offshore.

According to a second aspect of the invention, there is provided an autonomous bot configured for unmanned plant inspection and repair operations or for controlling the plant, the autonomous bot comprises: sensors for detecting an unforeseen situation that affects the operation of at least one of the autonomous bot and the unmanned plant; and an autonomous bot control system configured to characterize the unforeseen situation to determine whether it has disruptive impact on the autonomous bot, and to: (1) if the disruptive impact is characterized to have an impact on an autonomous bot action, predict, using an autonomous bot control model, how the disruptive impact affects other actions that the autonomous bot is configured to perform, and to determine a new control plan for the autonomous bot using the autonomous bot control model, for inspection and repair actions taking the characterized impact on the autonomous bot action into account, and to control the autonomous bot to execute the new control plan.

Further effects and features of the second aspect of the invention are largely analogous to those described above in connection with the first aspect of the invention.

According to a third aspect of the invention, there is provided a system comprising a set of autonomous bots according to the second aspect, and an unmanned floating production storage and offloading plant operative offshore on which the autonomous bots are deployed, the system further comprises: sensors for detecting and monitoring an unforeseen situation that affects the operation of the unmanned plant; and a control unit configured to: characterizing the unforeseen situation to determine whether it has disruptive impact on the plant, and to if the disruptive impact is characterized to have an impact on an unmanned plant functionality, predict, using an autonomous bot control model, the impact on the plant operation, and controlling the autonomous bot for repairing the damage according to a corresponding repair plan, or preparing, using the autonomous bot control model, a new control plan for the unmanned plant to dynamically adapt to a reduced plant functionality caused by the characterized impact on the plant operation, and execute the new control plan.

Further effects and features of the third aspect of the invention are largely analogous to those described above in connection with the first aspect and the second aspect of the invention.

According to a fourth aspect of the invention, there is provided a computer program product comprising a computer readable medium having stored thereon computer program means for controlling an autonomous bot configured for unmanned plant inspection and repair operations or for controlling the plant wherein the computer program product comprises instructions to cause a computer to carry out the method according to any one of the herein disclosed embodiments.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1A conceptually illustrates an unmanned plant on which an autonomous bot 100 is deployed according to an embodiment of the invention;
Fig. 2 is a flow-chart of method steps according to embodiments of the present invention;
Fig. 3 is a flow-chart of method steps according to embodiments of the present invention; and
Fig. 4 is a box diagram of an autonomous bot to embodiments of the present invention;

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

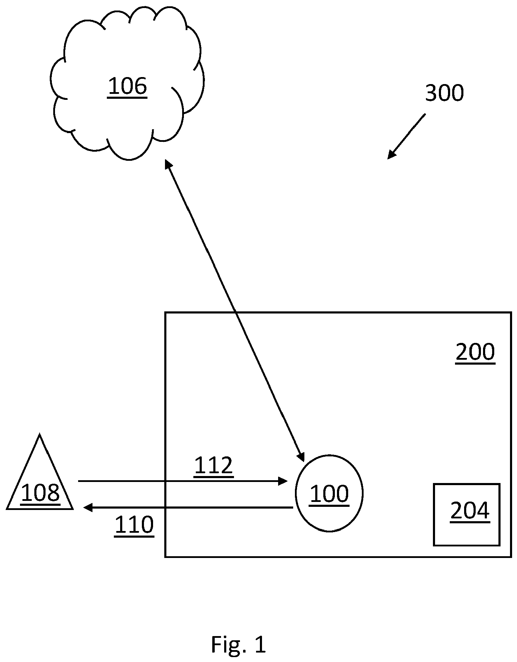

Fig. 1A conceptually illustrates an unmanned plant 200 on which an autonomous bot 100 is deployed. The unmanned plant 200 may be an autonomous floating production storage and offloading plant (FPSO) operative offshore. FPSOs are known as such and are generally floating vessels used by the oil industry for processing and storage of oil and natural gas. The plant 200 employs various functions and systems for ensuring stable and controlled management of the plant 200, such as steering gears and rudders that are used for controlling the plant 200 during heavy swells or rolling, or other e.g. hydraulic and electric control and production systems. Damage that may occur to the plant 200 requires repair, and further, various continuous maintenance tasks are needed in order to ensure proper operation of the plant 200. For example, tasks such as marine life cleaning from equipment of the plant 200 and re-coating paints to avoid corrosion. However, there are major repairs that might be needed on an unmanned plant that may arise in unforeseen circumstances.

To avoid using personnel in the harsh conditions of an offshore plant 200, the invention proposes autonomous bots 100 that are controlled for unmanned plant inspection and repair operations or for controlling the unmanned plant 200.

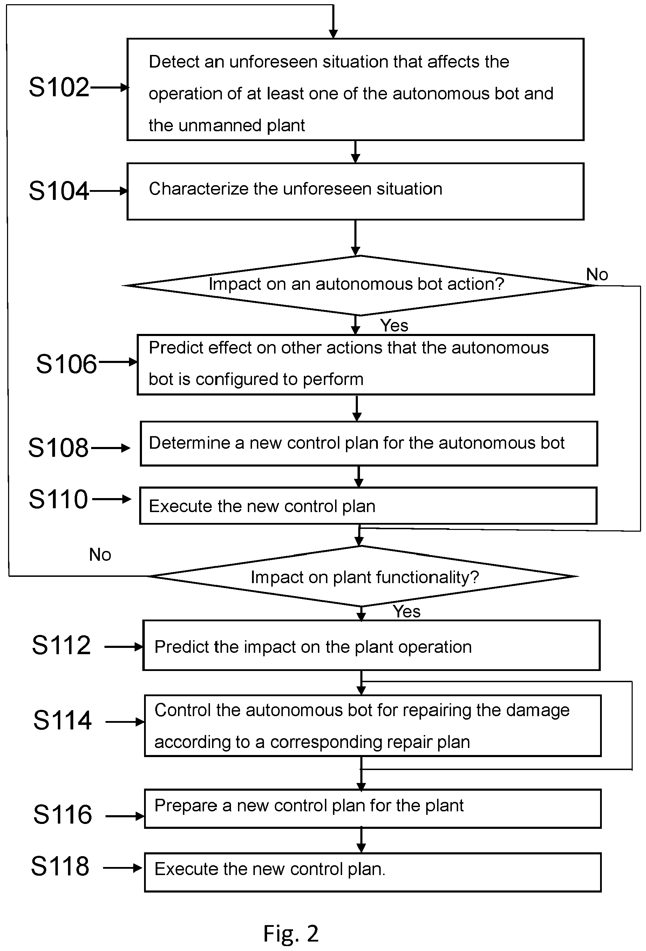

Turning to fig. 2, there shown a flow-chart of method steps according to embodiments of the invention. The method being for controlling an autonomous bot 100 configured for unmanned plant inspection and repair operations or for controlling the unmanned plant 200.

In step S102 an unforeseen situation is detected that affects the operation of at least one of the autonomous bot 100 and the unmanned plant 200.

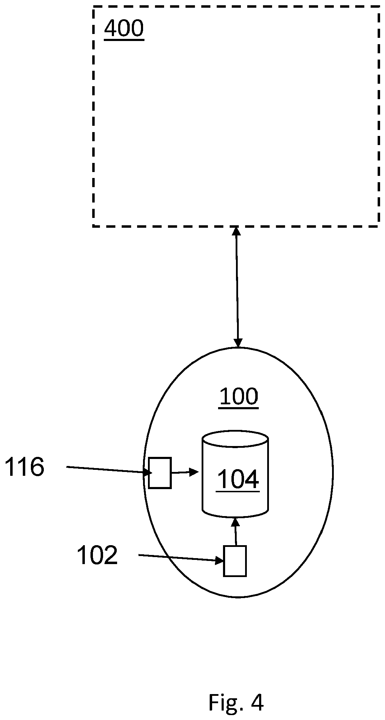

The autonomous bot 100, conceptually illustrated in fig. 4, comprises a set of sensors 102 for detecting an unforeseen situation that affects the operation of at least one of the autonomous bot and the unmanned plant. The sensors include cameras, audio sensors, smell sensors, accelerometers. The sensors provide sensing signals to an autonomous bot control system 104 comparing a controller configured to characterize the unforeseen situation to determine whether it has disruptive impact on the autonomous bot 100 in step S104. Thus, the autonomous bot 100 may sense and infer problems (e.g., gas leakage, spillage etc.) and performs actions to alleviate the problems.

Further, the autonomous bot may receive signals from a plant 200 control system in case of repair and maintenance is required by the plant 200.

The characterizing of the unforeseen situation includes to predict, using models of the adaptive bot control system that uses the sensor data, evaluates the sensor data with regards to prior known situations and based on prior training, or a predetermined scheme or table of situations, determines if the unforeseen situation has a disruptive impact on either the plant operation or the autonomous bot operations.

If the disruptive impact is characterized to have an impact on an autonomous bot action, predicting, in step S106, using an autonomous bot control model, how the disruptive impact affects other actions that the autonomous bot is configured to perform. Thus, using the autonomous bot control model, it is determined whether the disruptive impact which affected a first action, affects other actions that the autonomous bot is configured to perform. A disruptive impact is characterized as having an impact of sufficient degree for it to be classified as disruptive if the autonomous bot action is underperforming according to its corresponding benchmark. For example, if the angular rotation of a bot arm is compromised and is less than the specified angular rotation in the benchmark, the impact is characterized as disruptive.

Further, characterizing the disruptive impact may be performed by a classifier model that is trained to classify detected impacts. For example, given a control signal of the autonomous bot to perform a certain action, it is known what the actions should be and its result. If the outcome of the action is not as expected, the classifier may categorize or classify the impact as a disruptive impact. If the disruptive impact cannot be categorized or characterized by the autonomous bot model, new training and simulation is performed for determining a new control plan.

The autonomous bot control model may be loaded on the autonomous bot 100 itself, for example be operative on the autonomous bot control system 104. However, in other possible implementations, the autonomous bot control model is deployed outside the autonomous bot 100, such as in the cloud 106, i.e., on a server.

The autonomous bots 100 are equipped with communication arrangement 116 that are configured for communication with onshore, or remote-control centers 108 so that remote communication with the bots 100 is possible. Further, the autonomous bots 100 are equipped with processing and controller components as part of the autonomous bot control system 104.

The autonomous bot control model is a parameterized model with adjustable and/or learnable parameters. More specifically, the autonomous bot control model is preferably an artificial intelligence model that is configured to learn to perform planned or dynamic tasks at the plant 200. The artificial intelligence model may for example be a reinforcement learning model. Generally, the inputs for autonomous bot's self-control are various control signals knowns as states in the model, and output the expected bot action such as e.g., angular rotation e.g., in a quaternion space.

By using the autonomous bot control model, a new control plan for the autonomous bot is determined in step S108, for inspection and repair actions taking the characterized impact on the autonomous bot action into account. In other words, the autonomous bot control model is configured to dynamically, and in response to the new environment or circumstance leading to a new situation for the bot 100 caused by the disruptive impact, develop a new control plan. This is provided if the inputs from the new situation is within a set of situations in which the autonomous bot is able to develop a new control plan. For example, given an unforeseen circumstance such as a wave slam, detected by for example wave sensors, or estimated from speed estimations of the plant or ship, that might damage the ability of the autonomous bot 100 to reach a particular angle, the bot which is continuously monitoring itself compares its compromised reach to a benchmark and understand that it can now perform only with a reduced functionality. The reduced reach would be considered a disruptive impact on an autonomous bot action. The new control plan is developed, using e.g., active learning as discussed below, for performing the repair task with the reduced functionality.

A control plan includes a set of control signals to achieve a given output such as a repair task. The control signals relate to actions by the autonomous bot, e.g., angular rotation of joints or wheels, forward velocity, direction, actuator control, etc.

Detecting a disruptive impact on an autonomous bot action triggers the autonomous bot control system 104 to predict the impact of the disruptive impact on other actions that the bot 100 performs, and to develop new control plans for various pre-programmed inspection and repair tasks.

Predicting the impact of the disruptive impact includes comparing parameters of the characterized disruptive impact to an input set of the autonomous bot control model. If the parameters are not in the distribution of the autonomous bot control model input set, the autonomous bot control model is determined to be unable to predict the impact on the plant operation.

That the parameters are not in the model input set relates to that the parameters fall outside of the range for the autonomous bot model, e.g., as measured by so-called KL-divergence or by other means for detecting drift (e.g., data, concept, covariate drift). If the parameters are out of distribution, the model might not be trusted for predictions and it may be determined that the model needs retraining or to be overridden by the remote operator.

If the disruptive impact is out of the model inputs-set (i.e., out of distribution), the autonomous bot model may refer the situation to a remote operator 108 for any overrides to be considered on the bot behavior, or the model creates a new active-learning based simulation 400 for retraining the model for this novel disruptive impact. The instruction 110 includes an indication that an override of the autonomous bot should be considered.

A new active learning based simulation 400 means that the input space is sampled for the new situation to thereby include the new situation in the model. Active learning is known as such to the skilled person. Generally, active learning relates to sampling the input space for the design parameters that if simulated will result in most gains in improving predictions.

Once a new control plan is available it is executed in step S110.

If the disruptive impact is characterized to have an impact on an unmanned plant functionality may be determined by a plant control system 204 of the plant, the impact on the plant operation using the autonomous bot control model is predicted in step S112.

Thus, that the disruptive impact is characterized to have an impact on the unmanned plant functionality triggers the autonomous bot control system 104 to predict the impact of the disruptive impact on the FPSO stability and may suggests that the FPSO platform needs repairs to manage the unforeseen situation to avoid damages that could lead to failures and shutdown of the plant. The autonomous bot model diagnoses the damage and instructs a pre-planned repair action, or a dynamically evaluated repair action based on the current situation-based simulation performed by the model. The FPSO stability may be predicated from sensor data related to e.g., tilt of the plant, or for example, in case of plant operation stability, then set-points and expected controller response may be compared to determine if the plant is operating as expected, e.g., valve opening given a new set-point and the related impact on plant safety.

The autonomous bot 100 is controlled in step S114 for repairing the damage according to a corresponding repair plan.

Alternatively, a new control plan is prepared in step S116 using the autonomous bot control model, for the unmanned plant to dynamically adapt to a reduced plant functionality caused by the characterized impact on the plant operation.

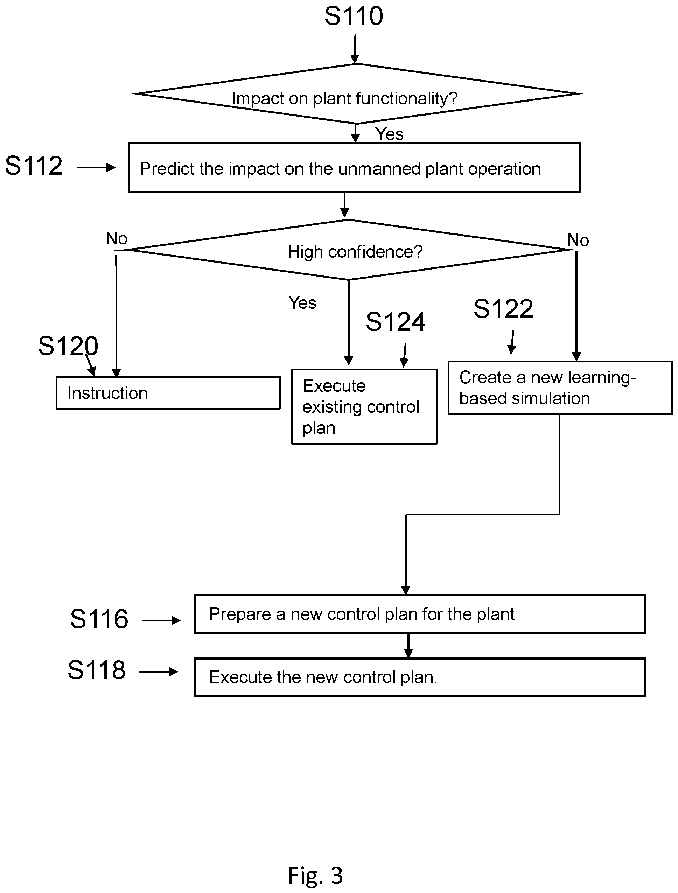

However, now with reference to fig. 3, if the disruptive impact is characterized to have an impact on an autonomous bot action, and if the autonomous bot control model, either operative on the bot 100 or in the cloud 106, is unable to predict the impact on the plant operation with sufficiently high confidence, providing, in step S120, by the autonomous bot, an instruction 110 thereof to a remote operator 108.

In addition, the autonomous bot control model may create, in step S122, a new learning-based simulation 400 for retraining the autonomous bot control model for the novel disruptive impact that was not predicted with sufficiently high confidence. Step S122 of creating a new simulation may be performed regardless of step S120.

If the impact on the plant operation is predicted with sufficiently high confidence, an existing repair or control plans is selected in step S124 based on the prediction of the disruptive impact.

The learning-based simulation 400 may be plant simulation environment available to the autonomous bot 100 in which a new repair plan may be simulated. The simulation may be based on reinforcement learning or for example a CFD (computational fluid dynamics) surrogate model. The may be simulation operated by using computer vison implemented by the bot 100 using a camera and some modelling scheme such as GAN (generative adversarial network) or VAE (variational autoencoder) to create a 3D scene from 2D images of the scene on the plant as captured by the cameras of the bot 100. The new repair plan is subsequently generated by applying e.g., reinforcement learning and CFD on the created 3D scene. The new repair plan is provided as an update including identified operation safety limits, by the autonomous bot 100 to the remote operator 108. Thus, the autonomous bot 100 is configured to, in response to that the disruptive impact was not predicted with sufficiently high confidence, perform a new simulation of the new, unpredictable situation, using a simulation environment 400 available to the bot. Here, using the learning-based environment 400, a new repair or control plan for the bot can be created, and subsequently sent to a remote operator 108.

An indication, e.g., an instruction 112 that the repair plan is approved by the remote operator 108 is received by the bot 100, whereby the repair plan according to a new control plant may be executed by the autonomous bot 100.

Executing the new control plan is performed in step S118.

Further, if the reduced plant functionality is not generalizable by the autonomous bot control model, retraining the autonomous bot control model for the reduced plant functionality using a learning-based simulation 400, and communicating, to a remote operator 108, information indicative of the unforeseen situation and a further new control plan along with safety implications related to the unforeseen situation.

Once an indication is received that the new control plan is approved by the remote operator, the new control plan is performed.

The autonomous bots may be remotely controllable by an operator. For this, the bots 100 include communication arrangements 116 that allow remote operators 108 to communicate remotely with the bots 100. The bots 100 may receive, via the communication arrangements, an override signal from the remote operator 108. The autonomous bot 100 may perform a task according to the instructions received from the remote operator 108.

There is further provided a system 300 comprising a set of autonomous bots 100, and an unmanned floating production storage and offloading plant 200 operative offshore on which the autonomous bots are deployed.

The system 300 further comprises sensors, either as part of the bots 100 or as part of the plant 200, for detecting and monitoring an unforeseen situation that affects the operation of the unmanned plant.

A control unit, either as part of the bots of as part of the plant, is configured to: characterizing the unforeseen situation to determine whether it has disruptive impact on the plant, and to if the disruptive impact is characterized to have an impact on an unmanned plant functionality, predict, using an autonomous bot control model, the impact on the plant operation, and controlling the autonomous bot for repairing the damage according to a corresponding repair plan, or preparing, using the autonomous bot control model, a new control plan for the unmanned plant to dynamically adapt to a reduced plant functionality caused by the characterized impact on the plant operation, and execute the new control plan.

The invention further relates to a computer program product comprising a computer readable medium having stored thereon computer program means for controlling an autonomous bot configured for unmanned plant inspection and repair operations or for controlling the plant. The computer program product comprises instructions to cause a computer to carry out the method according to any one of herein described embodiments. The computer program product is executed on a control unit comprised in the autonomous bot, in the plant, or for example on a server, i.e., as a Cloud-based application.

Many types of autonomous bots are applicable to the present invention. Generally, an autonomous bot may be considered a mobile manipulator comprising a suitable tool for the intended task, a propulsion system, a battery, navigation sensors, an integrated control system and communication system for communicating with a remote operator and with a server.

The autonomous bot may be configured to operate subsea or on the plant above sea level in a dry environment.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for controlling an autonomous bot (100) configured for unmanned plant inspection and repair operations or for controlling the unmanned plant (200), the method comprising:
detecting (S102) an unforeseen situation that affects the operation of at least one of the autonomous bot and the unmanned plant,
characterizing (S104), using an autonomous bot control system (104) employed by the bot, or a plant control system (204) of the plant, the unforeseen situation to determine whether it has disruptive impact on a respective one of the autonomous bot and the plant, wherein
(1) if the disruptive impact is characterized to have an impact on an autonomous bot action, predicting (S106), using an autonomous bot control model, how the disruptive impact affects other actions that the autonomous bot is configured to perform, and
determining (S108) a new control plan for the autonomous bot using the autonomous bot control model, for inspection and repair actions taking the characterized impact on the autonomous bot action into account, and executing (S110) the new control plan, or
(2) if the disruptive impact is characterized to have an impact on an unmanned plant functionality, predicting (S112), using the autonomous bot control model, the impact on the plant operation, and
controlling (S114) the autonomous bot for repairing the damage according to a corresponding repair plan, or
preparing (S116), using the autonomous bot control model, a new control plan for the unmanned plant to dynamically adapt to a reduced plant functionality caused by the characterized impact on the plant operation, and executing (S118) the new control plan.

2. The method according to claim 1, further comprising:
if the disruptive impact is characterized to have an impact on an autonomous bot action, and if the autonomous bot control model is unable to predict the impact on the plant operation with sufficiently high confidence, providing (S120), by the autonomous bot, an instruction (110) thereof to a remote operator.

3. The method according to claim 2, wherein the instruction includes an indication that an override of the autonomous bot should be considered.

4. The method according to any one of the preceding claims, further comprising:
if the disruptive impact is a novel disruptive impact and is characterized to have an impact on an autonomous bot action, and if the autonomous bot control model is unable to predict the impact on the plant operation with sufficiently high confidence for the novel disruptive impact, creating (S122), by the autonomous bot control model, a new learning-based simulation (400) for retraining the autonomous bot control model for the novel disruptive impact.

5. The method according to any one of claims 2 to 4, wherein for predicting the impact on the plant operation:
comparing parameters of the characterized disruptive impact to an input set of the autonomous bot control model, wherein if the parameters are not in the distribution of the autonomous bot control model input set, determining that the autonomous bot control model is unable to predict the impact on the plant operation.

6. The method according to any one of the preceding claims, further comprising:
if the disruptive impact is characterized to have an impact on the plant functionality, simulating, by the autonomous bot, the repair plan in a plant simulation environment available to the autonomous bot, updating, by the autonomous bot, the repair plan including identified operation safety limits with a remote operator.

7. The method according to claim 6, comprising,
receiving an indication (112) that the repair plan is approved by the remote operator, and
performing the repair plan by the autonomous bot.

8. The method according to any one of the preceding claims, comprising:
if the reduced plant functionality is not generalizable by the autonomous bot control model, retraining the autonomous bot control model for the reduced plant functionality using a learning-based simulation, and communicating, to a remote operator, information indicative of the unforeseen situation and a further new control plan along with safety implications related to the unforeseen situation.

9. The method according to claim 8, comprising,
receiving an indication that the new control plan is approved by the remote operator, and
performing (S118) the control plan by the plant.

10. The method according to any one of the preceding claims, wherein the autonomous bots are remotely controllable by an operator, the method comprising:
receiving, by the autonomous bot, an override signal from the remote operator, and
performing a task, by the autonomous bot, according to instructions received from the remote operator.

11. The method according to any one of the preceding claims, wherein the autonomous bot control model is a parameterized model with adjustable and/or learnable parameters.

12. The method according to any one of the preceding claims, wherein the plant is an autonomous floating production storage and offloading plant operative offshore.

13. An autonomous bot (100) configured for unmanned plant inspection and repair operations or for controlling the plant, the autonomous bot comprises:
sensors (102) for detecting an unforeseen situation that affects the operation of at least one of the autonomous bot and the unmanned plant; and an autonomous bot control system (104) configured to characterize the unforeseen situation to determine whether it has disruptive impact on the autonomous bot, and to:
(1) if the disruptive impact is characterized to have an impact on an autonomous bot action, predict, using an autonomous bot control model, how the disruptive impact affects other actions that the autonomous bot is configured to perform, and to
determine a new control plan for the autonomous bot using the autonomous bot control model, for inspection and repair actions taking the characterized impact on the autonomous bot action into account, and to control the autonomous bot to execute the new control plan.

14. A system (300) comprising a set of autonomous bots (100) according to claim 13, and an unmanned floating production storage and offloading plant operative offshore on which the autonomous bots are deployed, the system further comprises:
sensors for detecting and monitoring an unforeseen situation that affects the operation of the unmanned plant; and
a control unit configured to:
characterizing the unforeseen situation to determine whether it has disruptive impact on the plant, and to
if the disruptive impact is characterized to have an impact on an unmanned plant functionality, predict, using an autonomous bot control model, the impact on the plant operation, and controlling the autonomous bot for repairing the damage according to a corresponding repair plan, or
preparing, using the autonomous bot control model, a new control plan for the unmanned plant to dynamically adapt to a reduced plant functionality caused by the characterized impact on the plant operation, and execute the new control plan.

15. A computer program product comprising a computer readable medium having stored thereon computer program means for controlling an autonomous bot configured for unmanned plant inspection and repair operations or for controlling the plant wherein the computer program product comprises instructions to cause a computer to carry out the method according to any one of claims 1 to 12.
